(19) Europäisches Patentamt
European Patent Office
Office européen des brevets

(11) Numéro de publication: **0 264 325 B1**

(12) **FASCICULE DE BREVET EUROPEEN**

(45) Date de publication de fascicule du brevet: **02.01.92**

(51) Int. Cl.[5]: **G06F 13/38**, G06F 9/30

(21) Numéro de dépôt: **87402228.8**

(22) Date de dépôt: **07.10.87**

(54) **Automate pour rendre compatible un processeur avec un bus d'un autre processeur.**

(30) Priorité: **14.10.86 FR 8614245**

(43) Date de publication de la demande:
**20.04.88 Bulletin 88/16**

(45) Mention de la délivrance du brevet:
**02.01.92 Bulletin 92/01**

(84) Etats contractants désignés:
**DE GB**

(56) Documents cités:
**DE-A- 3 410 034**
**US-A- 4 287 563**

(73) Titulaire: **Finger, Ulrich**
**59, Rue Panserot**
**F-91510 Lardy(FR)**

Titulaire: **Ligneres, Pierre**
**80 bis, rue des Mûres**
**F-92160 Antony(FR)**

(72) Inventeur: **Finger, Ulrich**
**59, Rue Panserot**
**F-91510 Lardy(FR)**
Inventeur: **Ligneres, Pierre**
**80 bis, rue des Mûres**
**F-92160 Antony(FR)**

(74) Mandataire: **Mongrédien, André et al**
**c/o BREVATOME 25, rue de Ponthieu**
**F-75008 Paris(FR)**



Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention a pour objet un automate pour rendre compatible un premier processeur avec un bus adapté un second processeur, différent du premier processeur.

Plus exactement, l'automate de l'invention permet de supprimer l'incompatibilité existant entre le premier processeur et le bus du second processeur dans le cas où le jeu d'instructions du premier processeur comporte des instructions indivisibles de type lecture-modification-écriture, comprenant chacune au moins un cycle de lecture suivi d'au moins un cycle d'écriture, et dans lequel le protocole de bus du second processeur ne permet d'exécuter, parmi les instructions indivisibles de type lecture-modification-écriture, que les seules instructions comprenant un unique cycle de lecture suivi d'un unique cycle d'écriture.

Les instructions de type lecture-modification-écriture sont dites indivisibles car l'exécution des différents cycles de l'instruction se fait sans relâcher le bus entre les cycles. Dans la suite du texte, on désignera pour simplifier les instructions indivisibles de type lecture-modification-écriture sous le nom d'instructions LME.

Une incompatibilité entre les instructions LME de deux processeurs n'est pas rare, même entre deux processeurs d'un même constructeur, notamment entre un processeur de 16 bits et un processeur de 32 bits.

Dans un tel cas, la compatibilité ascendante est généralement assurée, c'est-à-dire que toutes les instructions du processeur de 16 bits peuvent être exécutées par le processeur de 32 bits. Par contre, la compatibilité n'est pas assurée dans l'autre sens, car le processeur de 32 bis possède des instructions propres qui ne peuvent pas être exécutées par le processeur de 16 bits.

Le remplacement des processeurs de 16 bits par des processeurs de 32 bits dans les machines à miroprocesseurs permet d'augmenter sensiblement la puissance de calcul de ces machines. Cependant, le remplacement des processeurs de 16 bits n'est pas nécessaire pour les processeurs d'entrée-sortie, qui n'ont pas besoin de la puissance d'un processeur de 32 bits et dont le coût du remplacement du logiciel ne serait donc pas économiquement justifié.

On peut donc trouver, notamment dans le cas des machines modulaires, des processeurs de 32 bits utilisés pour le calcul et des processeurs de 16 bits utilisés pour les entrées-sorties.

Le système SM 90 développé par le CNET et les machines dites sur bus, comme par exemple les machines construites autour du VME-BUS (marque déposée) sont des exemples de machines modulaires.

Dans les machines comprenant plusieurs processeurs, le remplacement de certains processeurs de 16 bits par des processeurs de 32 bits se traduit donc par la nécessité de connecter sur un même bus des processeurs différents. Il faut en particulier assurer la compatibilité entre le processeur de 32 bits et le bus, sur lequel les informations sont transmises suivant un protocole de bus correspondant au processeur de 16 bits.

L'invention a pour but de résoudre les incompatibilités nées des différences de format des instructions LME entre un premier processeur et un bus supportant un protocole correspondant à un second processeur.

De manière précise, l'invention a pour objet un automate pour relier un premier processeur à un bus informatique sur lequel les informations sont transmises suivant un protocole de bus conforme à un second processeur, dans le cas où ledit premier processeur est muni d'un jeu d'instructions comportant un ensemble d'instructions indivisibles de type lecture-modification-écriture, chaque instruction indivisible comprenant au moins un cycle de Lecture suivi d'au moins un cycle d'écriture, et ledit second processeur étant muni d'un Jeu d'instructions comportant au moins une instruction indivisible de type lecture-modification-écriture, lesdites instructions indivisibles du second processeur étant celles du premier processeur ne comportant qu'un unique cycle de lecture suivi d'un unique cycle d'écriture, ledit automate se caractérisant en ce qu'il comprend :

- un moyen de détection recevant des signaux du premier processeur et déterminant, au vu de ces signaux, si l'instruction en cours d'exécution par ledit premier processeur est une instruction indivisible de type lecture-modification-écriture comportant un unique cycle de lecture, ledit moyen de détection délivrant au moins un signal de validation si ladite instruction en cours d'exécution est une instruction indivisible de type lecture-modification-écriture comprenant un unique cycle de lecture,
- un moyen de simulation recevant ledit signal de validation et des signaux de commande émis par le processeur exécutant ladite instruction, ledit moyen de simulation délivrant sur ledit bus, sur réception dudit signal de validation, ladite instruction dans un format compatible avec le protocole dudit bus,

le premier processeur délivrant un signal d'identification lors de l'exécution d'une instruction indivisible de type lecture-modification-écriture, et le moyen de détection de l'automate recevant au moins ledit signal d'identification et le signal de lecture-écriture dudit premier processeur.

Selon un mode de réalisation préféré, le moyen de détection de l'automate de l'invention délivre un signal sur la ligne "erreur de bus" du premier processeur, lorsqu'il détecte une instruction indivisible de type lecture-modification-écriture comprenant au moins deux cycles successifs de lecture.

De manière préférée, le moyen de simulation de l'automate de l'invention reçoit au moins le signal de validation délivré par le moyen de détection, le signal de lecture-écriture et le signal d'impulsion de données délivré par le premier processeur, ledit moyen de simulation délivrant au moins un signal d'impulsion d'adresse simulé, un signal de lecture-écriture simulé et un signal d'impulsion de données simulé, lesdits signaux simulés étant compatibles avec le protocole du bus.

De manière avantageuse, le moyen de simulation de l'automate de l'invention comprend au moins un moyen à retard pour délivrer avec retard un signal reçu sur une entrée.

Les caractéristiques et avantages de l'invention ressortiront mieux de la description qui va suivre, donnée titre illustratif mais non limitatif, en référence aux dessins annexés, sur lesquels :

- la figure 1 illustre l'architecture d'une machine multiprocesseur contenant deux processeurs différents, et un automate conforme l'invention pour rendre compatibles le premier processeur et le bus du second processeur,
- la figure 2 est un chronogramme de l'instruction TAS des processeurs 68000 et 68010 de Motorola,
- la figure 3 est un chronogramme de l'instruction CAS du processeur 68020 de Motorola, dans le cas où les cycles de lecture et d'écriture s'appliquent à des mémoires organisées en mots de données de 32 bits ; le chronogramme de l'instruction TAS du processeur 68020 de Motorola est essentiellement identique,
- la figure 4 représente le chronogramme de l'instruction CAS du processeur 68020 de Motorola, dans le cas où les cycles de lecture et d'écriture s'appliquent à des mémoires organisées en mots de données de 16 bits,
- la figure 5 est un dessin schématique d'un mode de réalisation de l'automate de l'invention,
- la figure 6 illustre un mode de réalisation du moyen de détection de l'automate de l'invention,
- la figure 7 illustre un mode de réalisation du moyen de simulation de l'automate de l'invention,
- la figure 8 est un chronogramme des états des signaux reçus et émis par les moyens de détection et de simulation des figures 6 et 7, dans le cas de l'instruction TAS, et
- la figure 9 illustre un chronogramme des états des signaux reçus et émis par les moyens de détection et de simulation des figures 6 et 7 dans le cas de l'instruction CAS.

Il n'est pas inutile de rappeler que l'invention concerne un automate pour relier un premier processeur un bus informatique sur lequel les informations sont transmises suivant un protocole de bus correspondant à un second processeur, dans le cas où lesdits processeurs possèdent des instructions LME et où au moins le premier processeur possède une sortie pour délivrer un signal d'identification qui est validé lorsque ledit premier processeur exécute une telle instruction LME.

Cette sortie, ou le signal émis sur cette sortie, est souvent appelée "LOCK" notamment dans les processeurs de INTEL ; elle est notée "RMC" dans le processeur 68020 de Motorola.

Parmi les processeurs connus possédant ces caractéristiques, on peut citer notamment les processeurs 80186, 80286 et 80386 de Intel, 16032, 32032 et 32332 de National Semiconductor, et 68000, 68010, 68020 de Motorola.

A titre d'exemple, on va maintenant décrire un mode de réalisation de l'automate de l'invention dans le cas où le premier processeur est un processeur de 32 bits de type 68020 de Motorola et où le bus supporte le protocole de bus d'un second processeur de 16 bits de type 68000 ou 68010 de Motorola.

Dans cette description, les signaux émis ou reçus par les processeurs seront désignés conformément aux documents publiés par Motorola sur lesdits processeurs. Le lecteur est invité à se reporter à ces documents en cas de besoin.

On a représenté schématiquement sur la figure 1, l'architecture d'une machine multiprocesseur comprenant un automate conforme à l'invention.

Cette machine comprend un premier processeur 2, un second processeur 4 et un bus 6 sur lequel les informations sont transmises suivant un protocole de bus conforme au second processeur 4.

Cette machine comprend également un ensemble de moyens commandés par les processeurs, tels que par exemple une mémoire 8 et une interface d'entrée-sortie 10, cette dernière pouvant être reliée des terminaux d'impression 12, de visualisation 14 ou autre. Le second processeur 4, la mémoire 8 et l'interface d'entrée-sortie 10 sont reliés directement au bus 6.

L'invention concerne le cas où les processeurs 2, 4 sont au moins incompatibles en ce qui concerne les instructions LME. Dans ce cas, conformément à l'invention, un automate 16 est disposé entre au moins certaines sorties du processeur 2 et le bus 6. Cet automate a pour fonction de reconnaître les instructions LME incompatibles avec le protocole du bus 6.

Dans le cas, choisi à titre d'exemple, où le second processeur 4 est de type 68000, il ne comporte qu'une seule instruction LME. Cette instruction est notée TAS, pour "TEST AND SET". La figure 2 illustre le diagramme des temps représentatif de l'exécution de cette instruction.

Cette instruction se compose d'un cycle de lecture réalisé en cinq périodes d'horloge CK, suivi d'un cycle d'écriture réalisé en quatre périodes d'horloge. Ces deux cycles s'appliquent à la même adresse de mémoire. Cette instruction se caractérise en ce que l'impulsion d'adresse $\overline{AS}$ reste active pendant toute la durée de l'instruction sans être invalidée entre la fin du cycle de lecture et le début du cycle de l'écriture. Le mode d'accès en écriture ou en lecture dans la mémoire est indiqué par l'état logique du signal $R/\overline{W}$.

Considérons maintenant les instructions LME faisant partie du jeu d'instructions du premier processeur 2, dans le cas de l'exemple choisi, où celui-ci est un processeur de type 68020. Ces instructions sont au nombre de trois et sont notées respectivement TAS, CAS et CAS2.

L'instruction TAS du processeur 68020 a une fonction identique à celle de l'instruction TAS du processeur 68000. De plus, dans les deux cas, cette instruction comporte un cycle de lecture unique, suivi d'un cycle d'écriture unique, ces opérations s'appliquant à la même adresse de mémoire. Il est à remarquer que le signal $\overline{AS}$ devient inactif entre les deux cycles.

L'instruction CAS diffère de l'instruction TAS notamment en ce que le cycle de lecture et le cycle d'écriture peuvent porter sur des adresses différentes. Ces cycles de lecture et d'écriture portent sur des mots de 32 bits. La lecture peut donc être réalisée en un seul cycle si la mémoire adressée est organisée en mots de 32 bits, ou nécessite deux cycles de lecture successives si la mémoire adressée est organisée en mots de 16 bits. Il en est de même pour l'opération d'écriture.

Ainsi, suivant la mémoire utilisée, l'instruction CAS peut être obtenue en un cycle de lecture unique suivi d'un cycle d'écriture unique, ou bien peut nécessiter plusieurs cycles de lecture suivis de plusieurs cycles d'écriture. Ce dernier cas se produit également lorsque l'adresse, bien qu'ayant une longueur identique aux mots de la mémoire, est mal cadrée par rapport à ces mots et recouvre partiellement deux mots.

Enfin, l'instruction CAS2 est fonctionnellement identique à l'instruction CAS, mais porte sur des mots doubles de longueur 64 bits. Le bus de données du processeur ne comprenant que 32 lignes, l'instruction CAS2 nécessite au moins deux cycles de lecture suivis d'au moins deux cycles d'écriture, ceci quelle que soit la mémoire utilisée.

La figure 3 représente le chronogramme de l'instruction CAS, dans le cas où la lecture et l'écriture sont réalisées dans une mémoire à mots de 32 bits. Dans ce cas, l'instruction CAS comporte un unique cycle de lecture suivi d'un unique cycle d'écriture (si l'adresse est bien cadrée).

La validation du signal $\overline{RMC}$, délivré par le processeur, indique que l'instruction exécutée est de type LME. Parmi les autres signaux intéressants, on peut noter le signal $\overline{ECS}$ qui est validé pendant la première moitié d'une période d'horloge d'un cycle de bus, et qui peut être ainsi utilisé pour des opérations de séquencement ; le signal $R/\overline{W}$ qui indique si le cycle est un cycle de lecture ou d'écriture ; et le signal d'impulsions d'adresse $\overline{AS}$ qui valide l'adresse présentée sur les lignes d'adresse A0-A31.

On remarque que, à la différence de l'instruction TAS de la figure 2, le signal $\overline{AS}$ du chronogramme de la figure 3 est inactif entre la fin de l'opération de lecture et le début de l'opération d'écriture.

Le chronogramme correspondant à l'instruction TAS du processeur 68020 est pratiquement identique au chronogramme de la figure 3. Il en diffère essentiellement en ce que l'adresse de lecture et l'adresse d'écriture sont identiques pour l'instruction TAS, ce qui n'est nécessairement pas le cas pour l'instruction CAS, et en ce que l'instruction TAS s'applique à un mot de 8 bits alors que l'instruction CAS s'applique à des mots de 8, 16 ou 32 bits, la longueur étant donnée par les signaux SIZ0 et SIZ1.

On a représenté sur la figure 4 le chronogramme représentatif de l'instruction CAS, dans le cas où la mémoire adressée en lecture et en écriture est une mémoire organisée en mots de 16 bits. Dans ce cas, l'opération de lecture d'un mot de 32 bits nécessite deux cycles de lecture successifs. Il en est de même pour l'opération d'écriture.

Le chronogramme correspondant à l'instruction CAS2, dans le cas où la mémoire adressée en lecture et en écriture se compose de mots de 32 bits, est pratiquement identique au chronogramme de la figure 4. La seule différence réside dans le remplacement des 15 lignes de données D0-D15 par 32 lignes de données D0-D31.

Les instructions LME exécutées par le processeur 68020 comprennent donc un cycle de lecture unique suivi d'un cycle d'écriture unique, comme représenté sur la figure 3, ou au moins deux cycles de lecture suivis d'au moins deux cycles d'écriture, comme représenté sur la figure 4.

Rappelons que l'invention a pour but de reconnaître et de distinguer ces deux types d'instructions, afin de permettre l'exécution normale sur le bus, par exemple du processeur 68000, des instructions LME comprenant un seul cycle de lecture suivi d'un seul cycle d'écriture. Au contraire, les instructions LME, qui comprennent au moins deux cycles de lecture consécutifs et qui ne sont pas compatibles avec le protocole de bus seront soit bloquées par un signal de blocage de bus, soit transmises vers le bus avec dans ce cas un signal d'erreur transmis au processeur ayant émis ladite instruction. Le signal d'erreur prévient le processeur que l'instruction émise n'est pas compatible avec le protocole de bus bien que l'instruction puisse, dans certains cas, être éxécutée normalement.

La figure 5 illustre un mode de réalisation d'un automate 16 permettant d'atteindre ce but. Dans cette figure, l'automate 16 est disposé à titre d'exemple entre un processeur 2 de type 68020 et un bus 6 sur lequel les informations sont transmises suivant le protocole de bus conforme au processeur 68000.

L'automate 16 se compose principalement d'un moyen de détection 18 et d'un moyen de simulation 20. Le moyen de détection 18 a pour rôle de reconnaître l'exécution d'une instruction LME et de distinguer parmi les instructions LME possibles celles qui sont compatibles avec le protocole de bus du bus 6. Cette détection ne peut se faire qu'en décodant l'instruction car cette instruction n'est pas visible de l'extérieur du processeur.

Le moyen de simulation 20 a pour fonction, lorsque l'instruction LME est compatible avec le protocole de bus du bus 6, d'adapter au bus les signaux de commande émis par le moyen de détection.

Les entrées et les sorties du processeur 2 sont reliées directement au bus 6, à l'exception de certaines sorties qui sont appliquées sur des entrées de l'automate 16. Le moyen de détection 18 de l'automate 16 reçoit ainsi au moins le signal $\overline{RMC}$ dont l'état actif indique que l'instruction en cours d'exécution par le processeur 2 est une instruction LME ; le signal R/W indiquant si le cycle en cours d'exécution est un cycle de lecture ou d'écriture ; le signal $\overline{ECS}$ qui est actif pendant la première demi-période d'horloge de chaque cycle d'instruction, ce qui permet de synchroniser le moyen de détection.

Dans le cas décrit de l'adaptation des signaux émis par le processeur 68020 au bus du processeur 68000, le moyen de détection 18 reçoit également un signal DAB de prise du bus, déduit du signal d'impulsion d'adresse $\overline{AS}$. Pour tenir compte des différences entre les cycles des processeurs 68000 et 68020, le signal DAB est obtenu par retard d'environ 50 ns au signal $\overline{AS}$, par un moyen retardateur 22.

Le fonctionnement du moyen de détection 18 est le suivant. A chaque cycle élémentaire indiqué par le signal $\overline{ECS}$, le moyen de détection vérifie l'état du signal $\overline{RMC}$. Si ce signal est actif pendant un cycle élémentaire, le moyen de détection analyse l'état logique du signal R/$\overline{W}$ au cours du cycle élémentaire immédiatement postérieur.

Si le signal R/$\overline{W}$ indique que ledit cycle postérieur est un cycle de lecture, le moyen de détection 18 peut, par exemple, empêcher l'exécution de l'instruction sur le bus, ou activer un signal "erreur de bus" du processeur 2 par un signal $\overline{ERR}$, afin d'informer le processeur 2 que l'instruction émise comporte au moins deux cycles de lecture. Cette information peut être utilisée par le processeur pour le choix des instructions suivantes.

Au contraire, si le cycle postérieur est un cycle d'écriture, le moyen de détection 18 transmet au moyen de simulation 20 un signal $\overline{F}$ autorisant la transmision de l'instruction sur le bus 6, et le signal $\overline{ERR}$ est invalidé.

Le moyen de simulation 20 reçoit en outre le signal R/$\overline{W}$ délivré par le moyen de détection 18 et le signal d'impulsion de données DS délivré par le processeur 2. Il construit à partir de ces trois signaux un signal simulé d'impulsion d'adresse $\overline{AS}$*, un signal simulé de mode d'accès R/$\overline{W}$*, et un signal simulé d'impulsion de données $\overline{DS}$* respectant le format des signaux transmis normalement par le bus 6.

Le moyen de simulation 20 réalise donc une adaptation des signaux de commande des cycles de lecture et d'écriture au protocole du bus utilisé.

On a représenté schématiquement sur la figure 6 un mode de réalisation du moyen de détection 18.

Ce moyen de détection comprend trois bascules de type D 24, 26, 27 recevant sur leur entrée d'horloge CK le signal de séquencement $\overline{ECS}$ transmis par un amplificateur 28.

Le moyen de détection comprend également un ensemble d'amplificateurs et d'inverseurs :

- un amplificateur 29 recevant le signal R/$\overline{W}$,
- deux inverseurs 30, 32 en série, l'inverseur 30 recevant le signal R/$\overline{W}$ dans l'amplificateur 29,
- deux inverseurs 34, 36 en série, l'inverseur 34 recevant le signal $\overline{RMC}$,
- un inverseur 38 recevant le signal $\overline{AS}$, et
- un inverseur 40 recevant le signal $\overline{DAB}$, et.
- un amplificateur 42 recevant un signal D.

Le moyen de détection comprend enfin un ensemble de portes logiques :

- une porte ET 44 à trois entrées reliées respectivement à la sortie de l'inverseur 34, à la sortie inverseuse $\overline{Q}$ de la bascule 26 et à la sortie inverseuse $\overline{Q}$ de la bascule 24,
- une porte ET 46 à quatre entrées reliées respectivement à la sortie non-inverseuse Q de la bascule 24, la sortie inverseuse $\overline{Q}$ de la bascule 26, à la sortie de l'inverseur 30 et à la sortie de l'inverseur 34,

- une porte ET 48 à deux entrées reliées respectivement à la sortie non-inverseuse Q de la bascule 24 et la sortie inverseuse $\overline{Q}$ de la bascule 26,
- une porte ET 50 à deux entrées reliées respectivement à la sortie non-inverseuse Q de la bascule 26 et à la sortie de l'inverseur 34,
- une porte ET 52 à trois entrées reliées respectivement aux sorties des inverseurs 36, 38, 40,
- une porte ET 54 à deux entrées reliées respectivement à la sortie non-inverseuse Q de la bascule 24 et la sortie inverseuse $\overline{Q}$ de la bascule 26,
- une porte ET 56 trois entrées reliées respectivement à la sortie non-inverseuse Q de la bascule 24, la sortie de l'inverseur 30, et à la sortie de l'inverseur 38,
- une porte ET 58 à quatre entrées reliées respectivement à la sortie non-inverseuse Q de la bascule 26 et aux sorties des inverseurs 34, 38 et 40,
- une porte OU 60 dont les entrées sont reliées aux sorties des portes ET 44, 46 et dont la sortie est reliée à l'entrée de données D de la bascule 24,
- une porte OU 62 dont les entrées sont reliées aux sorties des portes ET 48, 50 et dont la sortie est reliée à l'entrée de données D de la bascule 26,
- une porte NON-OU 64 dont les entrées sont reliées aux sorties des portes ET 52, 54, 56, 58 et dont la sortie délivre le signal $\overline{F}$,
- une porte ET 66 à trois entrées reliées respectivement à la sortie non-inverseuse Q de la bascule 24, à la sortie de l'amplificateur 29 et à la sortie de l'inverseur 34, et
- une porte NON-ET 68 dont les entrées sont reliées à la sortie non-inverseuse Q de la bascule 27 et à la sortie de l'amplificateur 42, ladite porte délivrant le signal $\overline{ERR}$.

Les différents éléments du moyen de détection de la figure 6 sont reliés de manière à réaliser les équations logiques suivantes :

- $A = (RMC * \overline{B} * \overline{A}) + (A * \overline{R}/W * RMC * \overline{B})$,
- $B = (A * \overline{B}) + (B * RMC)$
- $F = (\overline{RMC} * AS * DAB) + (A * \overline{B}) + (A * \overline{R}/W * AS) + (RMC * B * DAB * AS)$
- $C = A * R/\overline{W} * RMC$
- $\overline{ERR} = C * D$

dans lesquelles les signaux A, B et C sont les signaux délivrés respectivement par les sorties non inverseuses Q des bascules 24, 26 et 27 et dans lesquelles " + " représente l'opération logique OU et "*" représente l'opération logique ET.

Le signal D est un signal optionnel mis à la disposition de l'utilisateur pour valider le signal C qui est à l'origine du signal $\overline{ERR}$. Si l'utilisateur ne se sert pas du signal $\overline{ERR}$, il peut l'invalider en appliquant en permanence un signal D au niveau haut. Pour supprimer la possibilité d'invalidation du signal $\overline{ERR}$, il suffit de supprimer la ligne du signal D et de remplacer la porte NON-ET 68 par un inverseur recevant le signal C.

On a représenté sur la figure 7 un mode de réalisation du moyen de simulation 18 dans le cas de l'adaptation du processeur 68020 au bus d'un processeur 68000.

Ce moyen de simulation reçoit les signaux $\overline{F}$ et $R/\overline{W}$ délivrés par le moyen de détection, et le signal $\overline{DS}$ délivré par le processeur. Il délivre un signal d'impulsions d'adresse simulé $\overline{AS}$*, un signal de lecture-écriture simulé $R/\overline{W}$* et un signal d'impulsions de données simulé $\overline{DS}$*.

Dans le cas de l'exemple décrit, le moyen de simulation se résume à un moyen de retard 74 appliqué au signal $\overline{DS}$ pour respecter les caractéristiques du protocole du bus, qui demande un retard de 35 nanosecondes minimum entre le chargement du signal $R/\overline{W}$* et l'application de l'impulsion de données $\overline{DS}$* dans le cas d'une instruction LME.

L'automate de l'invention se compose d'un moyen de détection et d'un moyen de simulation. Un mode de réalisation de chacun de ces moyens a été décrit en référence aux figures 6 et 7. Cet automate peut être réalisé notamment à partir d'un circuit à cellules précaractérisées tel qu'un circuit de type PAL (marque déposée).

Le chronogramme de la figure 8 illustre l'état logique des signaux reçus ou produits par l'automate de l'invention dans le cas de l'exécution d'une instruction LME comportant un unique cycle de lecture suivi d'un unique cycle d'écriture.

On constate en comparant ce chronogramme avec le chronogramme de la figure 2 décrivant l'instruction TAS du processeur 68000 que l'automate de l'invention produit des signaux compatibles avec le bus du processeur 68000. En particulier les signaux $\overline{AS}$*, $\overline{DS}$* et $R/\overline{W}$* du chronogramme de la figure 8 ont la même forme que les signaux $\overline{AS}$, $\overline{DS}$ ($\overline{UDS}$ ou $\overline{LDS}$), et $R/\overline{W}$ du chronogramme de la figure 2.

De la même manière, le chronogramme de la figure 9 illustre l'état logique des signaux reçus ou produits par l'automate de l'invention lors de l'exécution d'une instruction LME comprenant plusieurs cycles de lecture consécutifs.

On remarque notamment que le signal $\overline{AS}$* ne reste pas valide pendant deux cycles consécutifs, contrairement au signal $\overline{AS}$ du chronogramme de la figure 3. L'instruction correspondant au chronogramme de la figure 9 n'est donc pas compatible avec le protocole du bus. L'état du signal $\overline{ERR}$ émis par le moyen de détection permet alors de prévenir le processeur que l'instruction comprend au moins deux cycles de lecture.

## Revendications

**1.** Automate pour relier un premier processeur (2) à un bus informatique (6) sur lequel les informations sont transmises suivant un protocole de bus conforme à un second processeur (4), dans le cas où ledit premier processeur est muni d'un jeu d'instructions comportant un ensemble d'instructions indivisibles de type Lecture-modification-écriture, chaque instruction indivisible comprenant au moins un cycle de lecture suivi d'au moins un cycle d'écriture, et ledit second processeur étant muni d'un jeu d'instructions comportant au moins une instruction indivisible de type lecture-modification-écriture, lesdites instructions indivisibles du second processeur étant celles du premier processeur ne comportant qu'un unique cycle de lecture suivi d'un unique cycle d'écriture, Ledit automate étant caractérisé en ce qu'il comprend :

- un moyen de détection (18) recevant des signaux du premier processeur et déterminant, au vu de ces signaux, si l'instruction en cours d'exécution par ledit premier processeur est une instruction indivisible de type lecture-modification-écriture comportant un unique cycle de lecture, ledit moyen de détection délivrant au moins un signal de validation ($\overline{F}$) si ladite instruction en cours d'exécution est une instruction indivisible de type lecture-modification-écriture composée d'un unique cycle de lecture,
- un moyen de simulation (20) recevant ledit signal de validation ($\overline{F}$) et des signaux de commande émis par le processeur exécutant ladite instruction, ledit moyen de simulation délivrant sur ledit bus, sur réception dudit signal de validation, ladite instruction dans un format compatible avec le protocole dudit bus,

le premier processeur (2) délivrant un signal d'identification ($\overline{RMC}$) lors de l'exécution d'une instruction indivisible de type lecture-modification-écriture, et le moyen de détection recevant au moins ledit signal d'identifiation et le signal de lecture-écriture (R/$\overline{W}$) dudit premier processeur.

**2.** Automate selon la revendication 1, caractérisé en ce que le moyen de détection délivre un signal ($\overline{ERR}$) sur la ligne "erreur de bus" du premier processeur, lorsqu'il détecte une instruction indivisible de type lecture-modification-écriture comprenant au moins deux cycles successifs de lecture.

**3.** Automate selon l'une quelconque des revendications 1 et 2, caractérisé en ce que le moyen de simulation reçoit au moins Le signal de validation ($\overline{F}$) délivré par le moyen de détection (18), le signal de Lecture-écriture (R/$\overline{W}$) et le signal d'impulsion de données ($\overline{DS}$) délivré par le premier processeur, ledit moyen de simulation délivrant au moins un signal d'impulsion d'adresse simulé ($\overline{AS}$*), un signal de lecture-écriture simulé (R/$\overline{W}$*) et un signal d'impulsion de données simulé ($\overline{DS}$*), lesdits signaux simulés étant compatibles avec le protocole du bus.

**4.** Automate selon la revendication 3, caractérisé en ce que le moyen de simulation comprend au moins un moyen à retard (74) pour délivrer avec retard un signal reçu sur une entrée.

## Claims

**1.** Automaton for connecting a first processor (2) to a data processing bus (6) on which the informations are transmitted in accordance with a bus protocol applying to a second processor (4), in the case where said first processor is provided with a set of instructions incorporating a group of indivisible instructions of the reading - modification - writing type, each indivisible instruction having at least one reading cycle followed by at least one writing cycle, whilst the second processor is provided with a set of instructions having at least one indivisible instruction of the reading - modification writing type, said indivisible instructions from the second processor being those of the first processor and have only a single reading cycle followed by a single writing cycle, characterized in that the said automaton comprises a detection means (18) receiving signals from the first processor and determining, in view of these signals, whether the instruction being performed by the first processor is an indivisible instruction of the reading - modification - writing type having a single reading cycle, said detection means supplying at least one validation signal ($\overline{F}$) if said instruction being performed is an indivisible instruction of the reading - modification - writing type having a single reading cycle and a simulation means (20) receiving said validation signal ($\overline{F}$) and control signals emitted by the processor performing said instruction, said simulation means delivering on said bus, on reception of said validation signal, said instruction in a format compatible with the protocol of said bus and the first processor (2) supplying an identification signal ($\overline{RMC}$) during the performance of an indivisible instruction of the reading - modification - writing type and the detection means receives atleast said identification signal and the reading - writing signal (R/$\overline{W}$) from the first processor.

2. Automaton according to claim 1, characterized in that the detection means supplies a signal ($\overline{ERR}$) on the "bus error" line of the first processor, when it detects an indivisible instruction of the reading - modification - writing type having at least two successive reading cycles.

3. Automaton according to any one of the claims 1 and 2, characterized in that the simulation means receives at least the validation signal ($\overline{F}$) supplied by the detection means (18), the reading - writing signal (R/$\overline{W}$) and the data pulse signal ($\overline{DS}$) supplied by the first processor, said simulation means supplying at least one simulated address pulse signal ($\overline{AS}$*), a simulated reading - writing signal (R/$\overline{W}$*) and a simulated data pulse signal ($\overline{DS}$*), said simulated signals being compatible with the bus protocol.

4. Automaton according to claim 3, characterized in that the simulation means comprises at least one delay means (74) for supplying with a delay a signal received on an input.

**Patentansprüche**

1. Automat zum Verbinden eines ersten Prozessors (2) mit einem Informationsbus (6), auf dem die Informationen entsprechend einem Busprotokoll entsprechend eines zweiten Prozessors (4) übertragen werden, für den Fall, daß der erste Prozessor mit einem Befehlssatz ausgerüstet ist, der eine Gruppe nicht teilbarer Befehle des Typs Lesen-Modifizieren-Schreiben aufweist, wobei jeder nicht teilbare Befehl wenigstens einen Lesezyklus umfaßt, der von wenigstens einem Schreibzyklus gefolgt wird, und wobei der zweite Prozessor mit einem Befehlssatz ausgerüstet ist, der
wenigstens einen nicht teilbaren Befehl des Typs Lesen-Modifizieren-Schreiben umfaßt, wobei die nicht teilbaren Befehle des zweiten Prozessors und die des ersten Prozessors nur einen einzigen Lesezyklus, der von einem einzigen Schreibzyklus gefolgt wird, umfassen, wobei der Automat dadurch gekennzeichnet ist, daß er umfaßt:
   - eine Detektionsvorrichtung (18), die Signale vom ersten Prozessor empfängt und in Hinblick auf diese Signale feststellt, ob der gerade von dem ersten Prozessor ausgeführte Befehl ein nicht teilbarer Befehl des Typs Lesen-Modifizieren-Schreiben ist, der einen einzigen Lesezyklus aufweist, wobei die Detektionsvorrichtung wenigstens ein Bestätigungssignal ($\overline{F}$) erzeugt, wenn der gerade ausgeführte Befehl ein nicht teilbarer Befehl des Typs Lesen-Modifizieren-Schreiben ist, der einen einzigen Lesezyklus aufweist,
   - eine Simulationsvorrichtung (20), die das Bestätigungssignal ($\overline{F}$) und von dem diesen Befehl ausführenden Prozessor ausgesandte Steuersignale erhält, wobei die Simulationsvorrichtung bei Erhalt des Bestätigungssignals den Befehl in einem mit dem Protokoll des Busses kompatiblen Format auf dem Bus ausgibt und der erste Prozessor (2) ein Identifikationssignal ($\overline{RMC}$) bei der Ausführung des einen, nicht teilbaren Befehls des Typs Lesen-Modifizieren-Schreiben erzeugt und die Detektionsvorrichtung wenigstens dieses Identifikationssignal und das Schreib-Lesesignal (R/$\overline{W}$) des ersten Prozessors empfängt.

2. Automat nach Anspruch 1, dadurch gekennzeichnet, daß die Detektionsvorrichtung ein Signal ($\overline{ERR}$) auf der Fehlerleitung des Busses des ersten Prozessors erzeugt, wenn sie einen nicht teilbaren Befehl des Typs Lesen-Modifizieren-Schreiben mit wenigstens zwei aufeinanderfolgenden Schreibzyklen feststellt.

3. Automat nach einem der Ansprüche 1 und 2, dadurch gekennzeichnet, daß die Simulationsvorrichtung wenigstens das von der Detektionsvorrichtung (18) erzeugte Bestätigungssignal ($\overline{F}$), das Schreib-Lesesignal (R/$\overline{W}$) und das von dem ersten Prozessor erzeugte Datenpulssignal ($\overline{DS}$) erhält, wobei die Simulationsvorrichtung wenigstens ein simuliertes Adressimpulssignal ($\overline{AS}$*), ein simuliertes Schreib-Lesesignal (R/$\overline{W}$*) und ein simuliertes Datenpulssignal ($\overline{DS}$*) erzeugt, wobei die simulierten Daten mit dem Busprotokoll kompatibel sind.

4. Automat nach Anspruch 3, dadurch gekennzeichnet, daß die Simulationsvorrichtung wenigstens eine Verzögerungsvorrichtung (74) umfaßt, um ein am Eingang empfangenes Signal mit Verzögerung abzugeben.

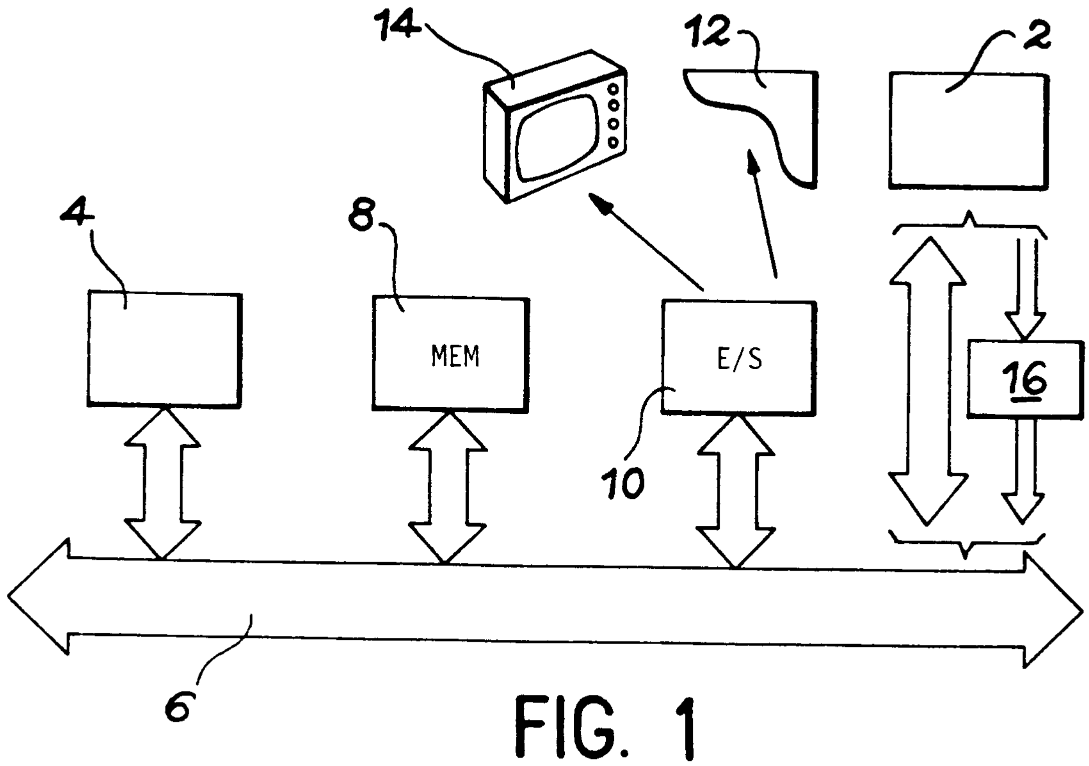
14
12
2
4
8
MEM
E/S
16
10
6

FIG. 1

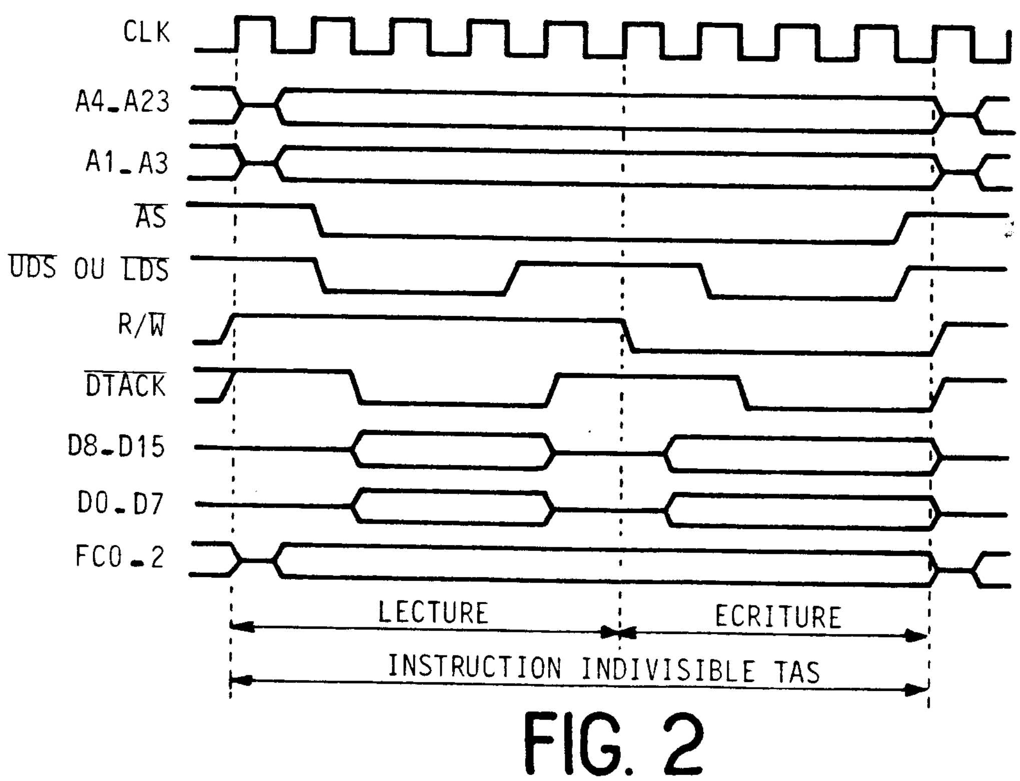
CLK
A4_A23
A1_A3
AS
UDS OU LDS
R/W
DTACK
D8_D15
D0_D7
FC0_2
LECTURE
ECRITURE
INSTRUCTION INDIVISIBLE TAS

FIG. 2

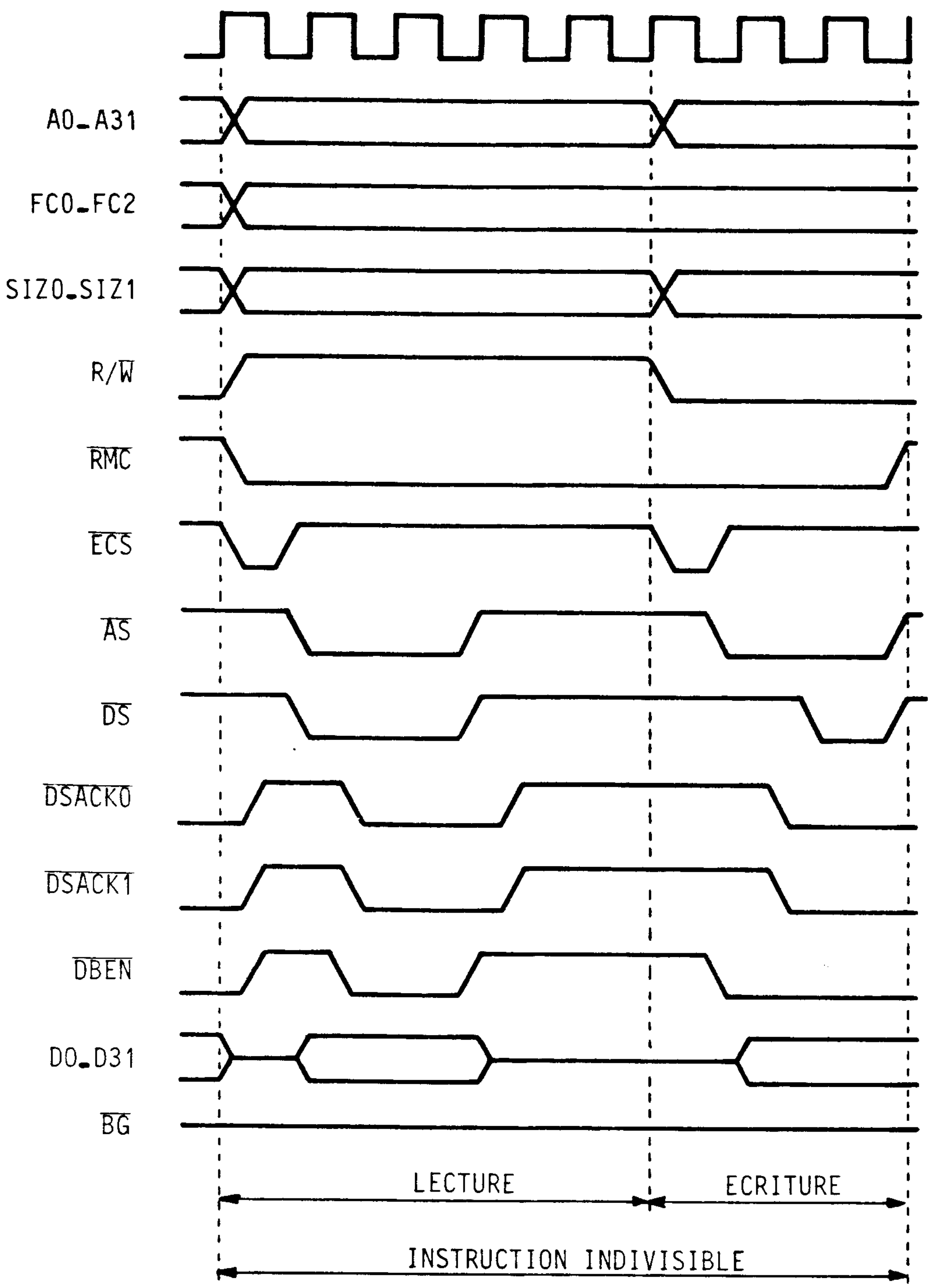
A0_A31
FC0_FC2
SIZ0_SIZ1
R/$\overline{W}$
$\overline{RMC}$
$\overline{ECS}$
$\overline{AS}$
$\overline{DS}$
$\overline{DSACK0}$
$\overline{DSACK1}$
$\overline{DBEN}$
D0_D31
$\overline{BG}$
LECTURE
ECRITURE
INSTRUCTION INDIVISIBLE

FIG. 3

FIG. 4

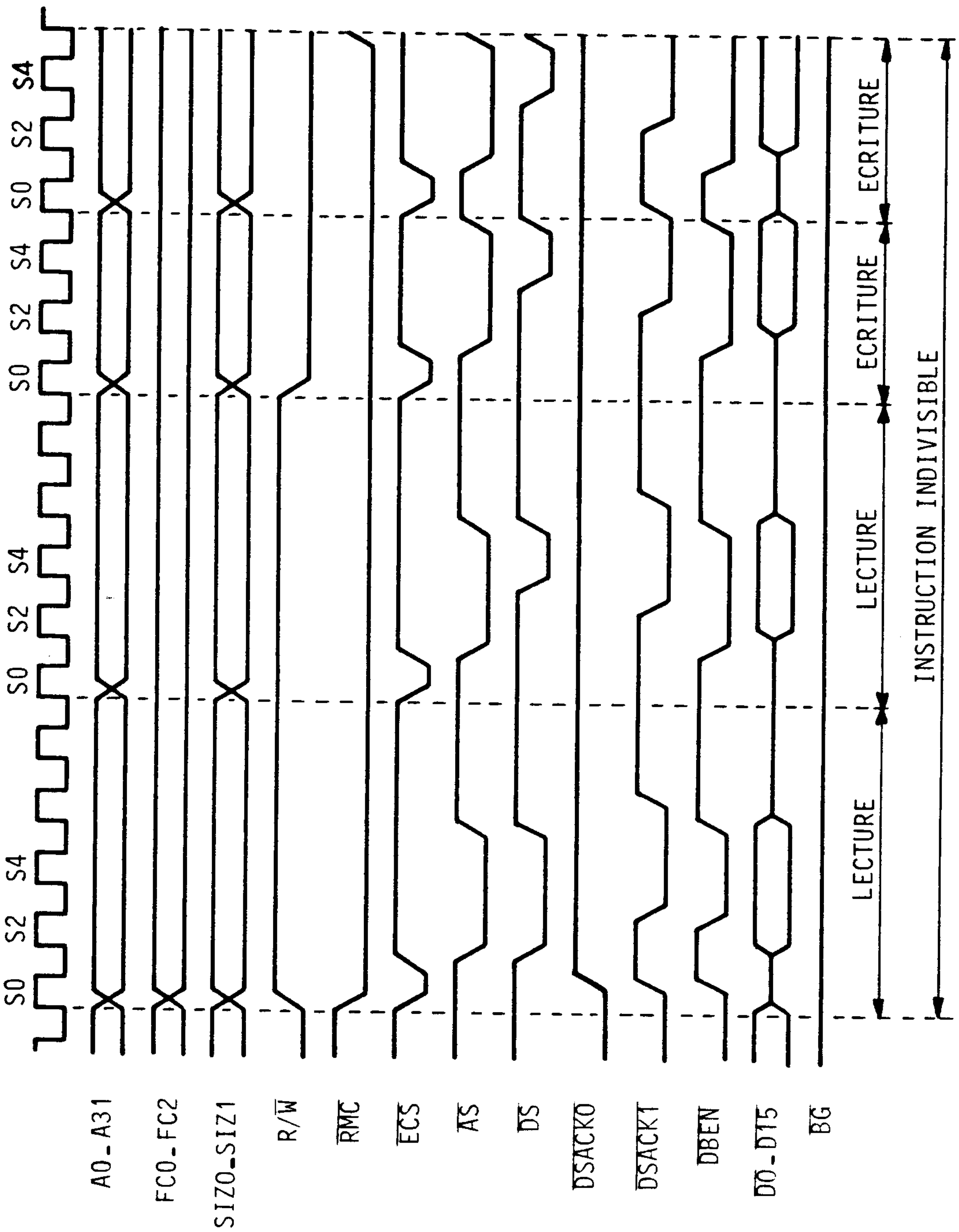
S0
S2
S4
A0_A31
FC0_FC2
SIZ0_SIZ1
R/W
RMC
ECS
AS
DS
DSACK0
DSACK1
DBEN
D0_D15
BG
LECTURE
LECTURE
ECRITURE
ECRITURE
INSTRUCTION INDIVISIBLE

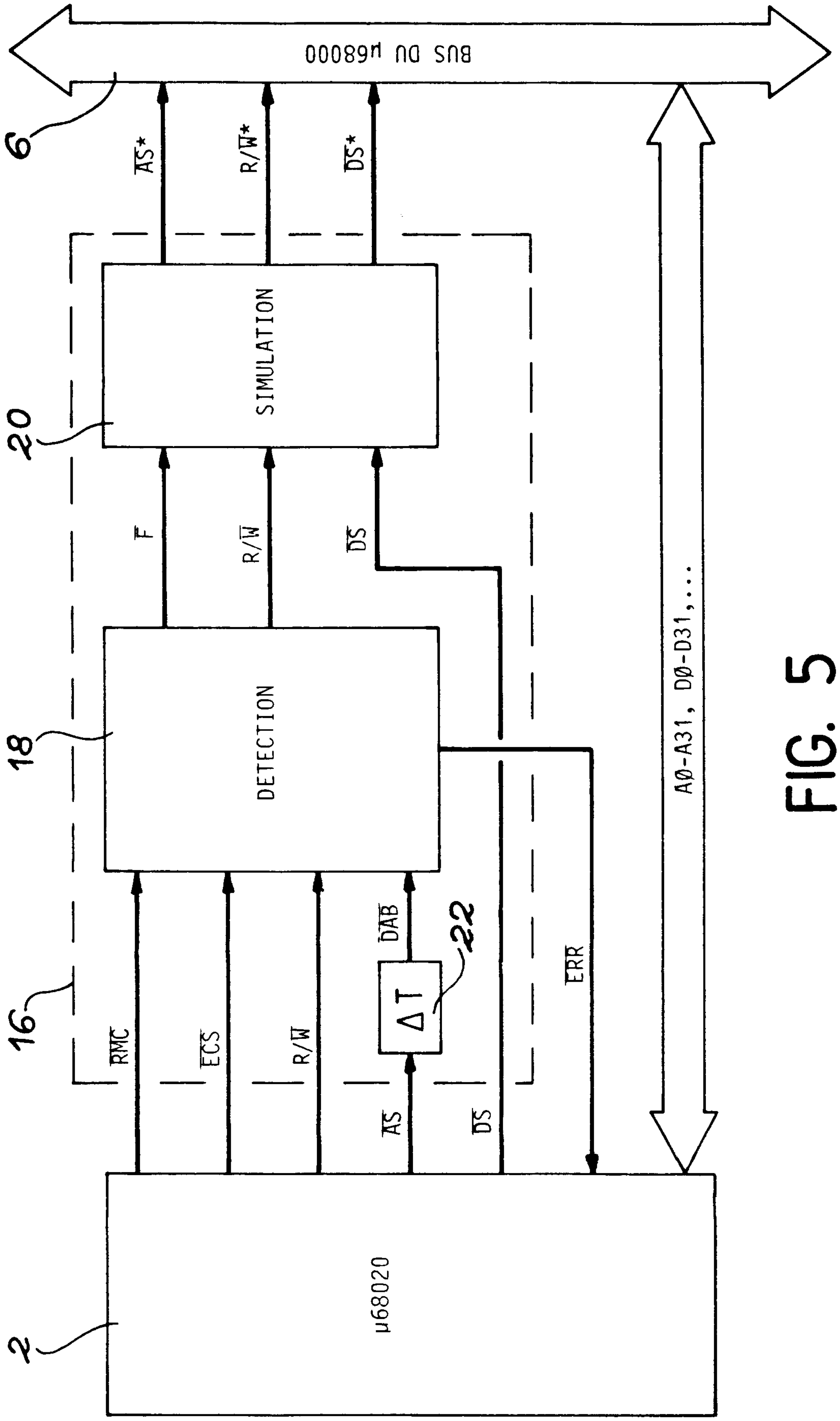
BUS DU μ68000
6
AS*
R/W*
DS*
20
SIMULATION
F
R/W
DS
18
DETECTION
16
RMC
ECS
R/W
DAB
22
ΔT
AS
DS
ERR
AØ-A31, DØ-D31,...
2
μ68020

FIG. 5

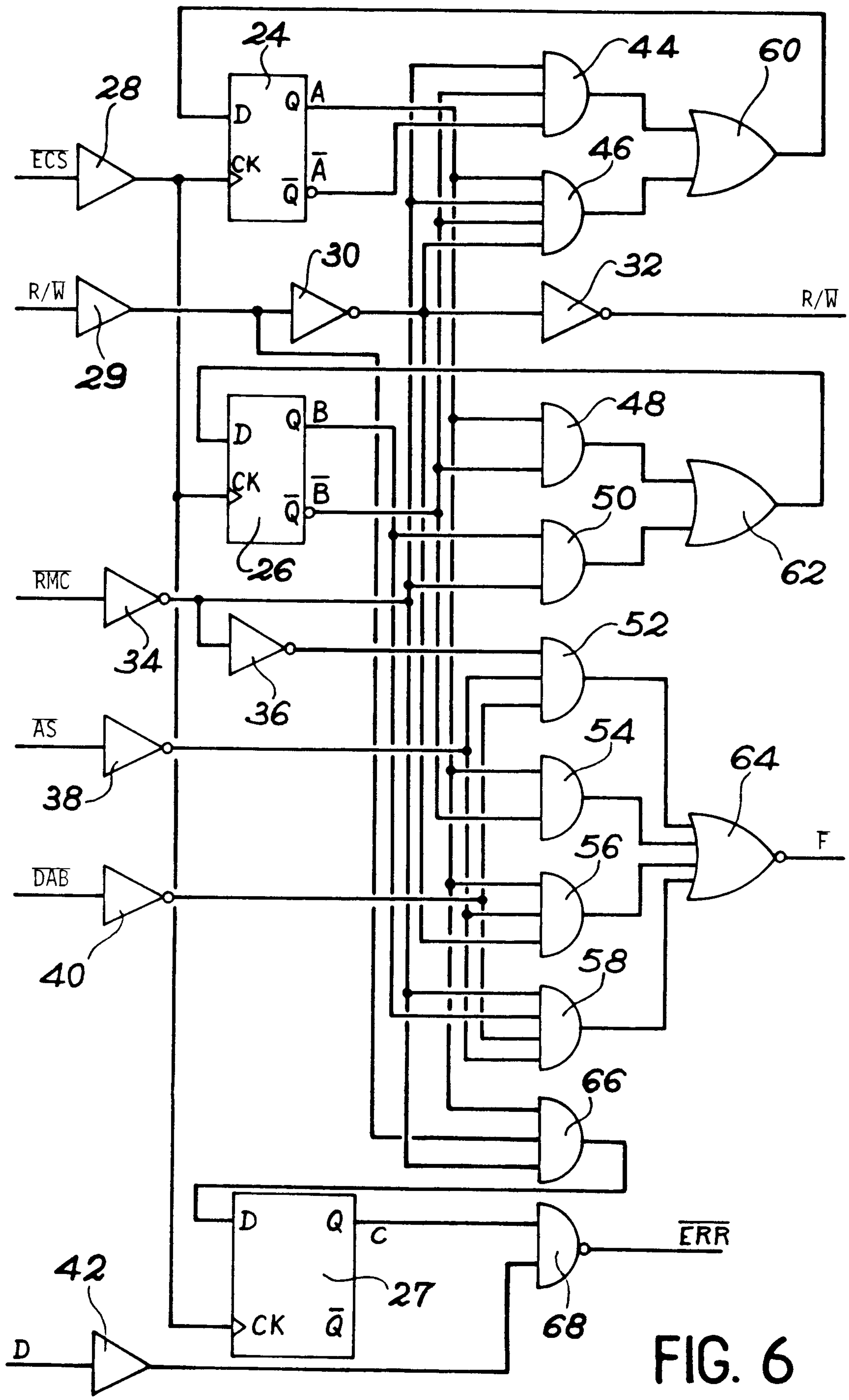
24
28
44
60
D
Q
A
ECS
CK
Ā
Q̄
46
30
32
R/W̄
R/W̄
29
48
D
Q
B
CK
B̄
Q̄
50
26
62
RMC
34
52
36
AS
54
64
38
56
F
DAB
40
58
66
D
Q
C
ERR
27
42
CK
Q̄
68
D

FIG. 6

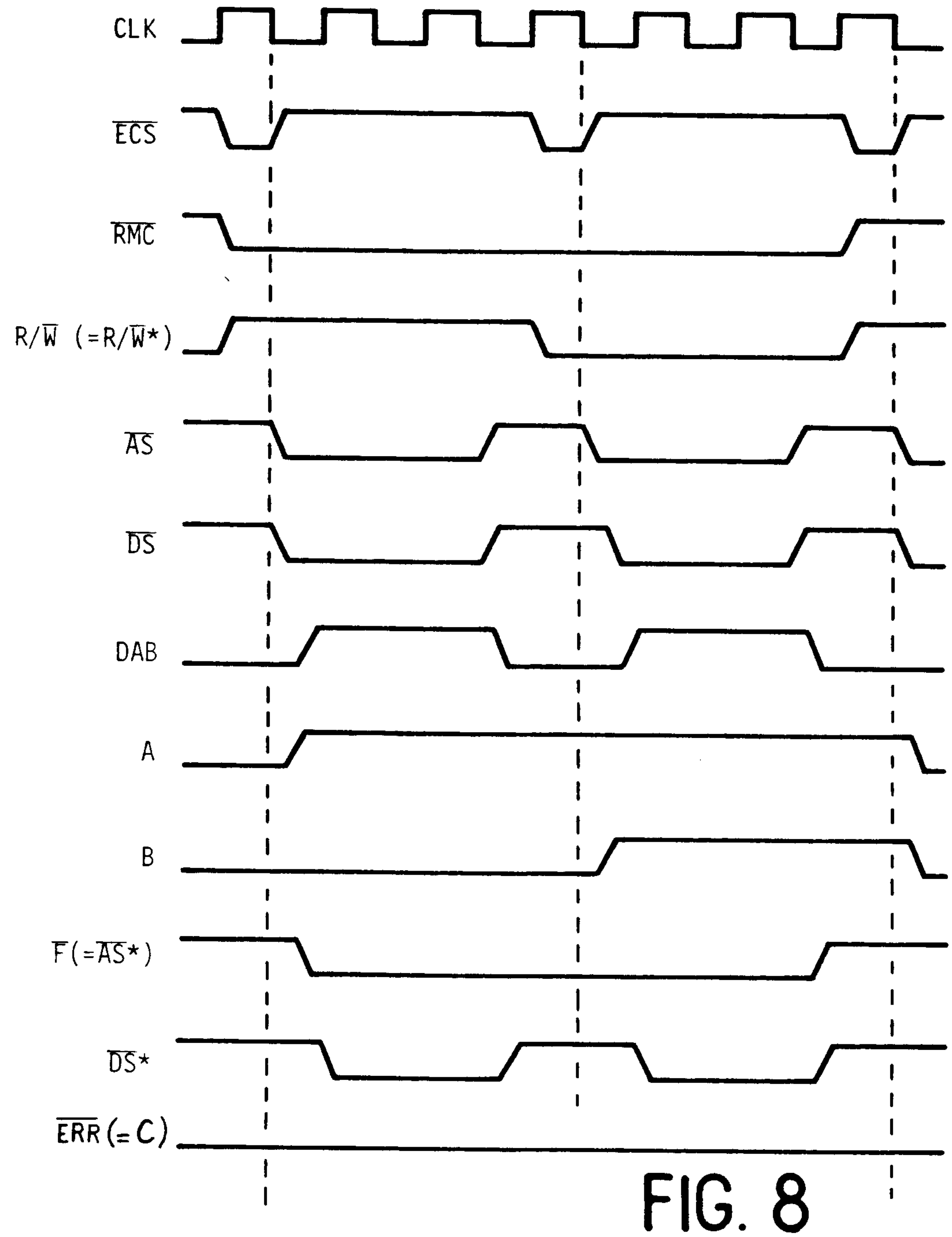
CLK
$\overline{ECS}$
$\overline{RMC}$
R/$\overline{W}$ (=R/$\overline{W}$*)
$\overline{AS}$
$\overline{DS}$
DAB
A
B
$\overline{F}$(=$\overline{AS}$*)
$\overline{DS}$*
$\overline{ERR}$(=C)

FIG. 8

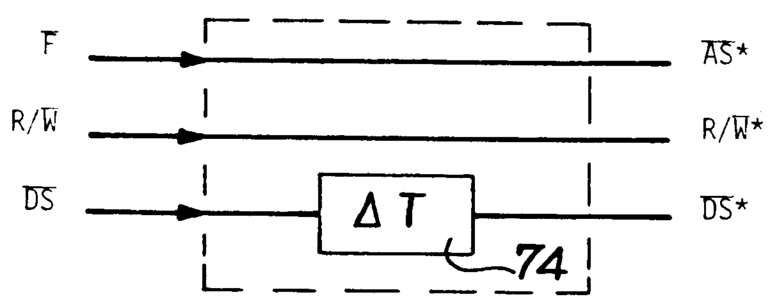
F
R/$\overline{W}$
$\overline{DS}$
ΔT
74
$\overline{AS}$*
R/$\overline{W}$*
$\overline{DS}$*

FIG. 7

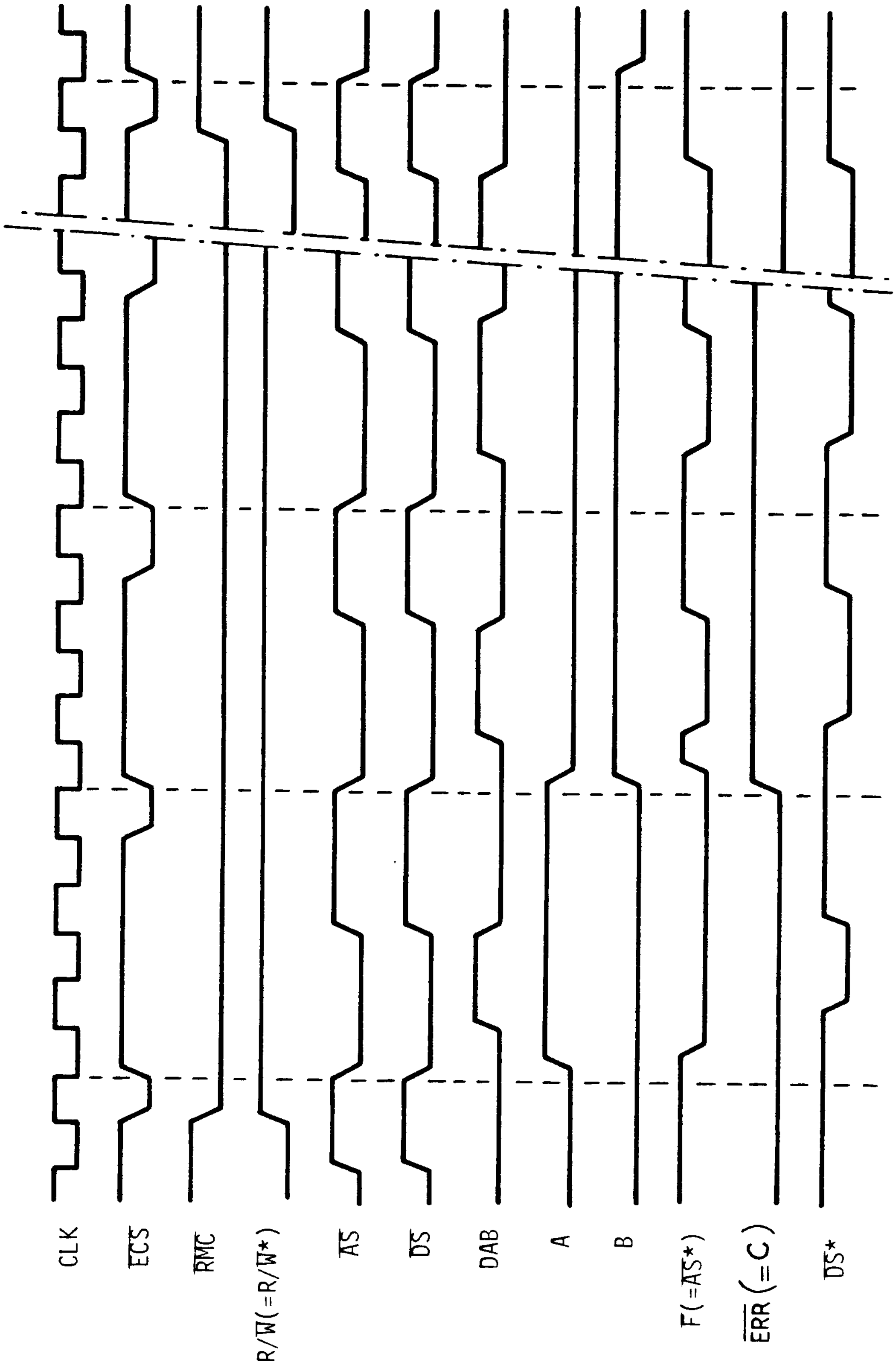


FIG. 9